# EUROPEAN PATENT SPECIFICATION

(11) **EP 3 271 439 B1**
(45) Date of publication and mention of the grant of the patent: **07.11.2018**
(21) Application number: 16703162.4
(22) Date of filing: 08.02.2016
(51) Int. Cl.: C09K 8/584, E21B 43/16

(54) **BIODEGRADABLE SUGAR-AMIDE-SURFACTANTS FOR ENHANCED OIL RECOVERY**
BIOLOGISCH ABBAUBARE ZUCKERAMIDTENSIDE ZUR GESTEIGERTEN ÖLGEWINNUNG
TENSIO-ACTIFS SUCRE-AMIDES BIODÉGRADABLES POUR UNE RÉCUPÉRATION AMÉLIORÉE DE L'HUILE

(30) Priority: 19.03.2015 US 201514662564; 15.04.2015 EP 15001079
(43) Date of publication of application: 24.01.2018
(73) Proprietor: Clariant International Ltd, 4132 Muttenz (CH)
(72) Inventor: SCHERL, Franz-Xaver, 84508 Burgkirchen (DE); LEINWEBER, Dirk, 65719 Kelkheim (DE); KAISER, Dr. Anton, 84453 Mühldorf am Inn (DE); WYLDE, Jonathan, The Woodlands, Texas 77382 (US); MAHMOUDKHANI, Amir, The Woodlands, Texas 77382 (US); PURKAYASTHA, Nirupam, 65812 Bad Soden (DE)
(74) Representative: Mikulecky, Klaus
(86) International application number: PCT/EP2016/052589
(87) International publication number: WO 2016/146303

(56) References cited:
- WO-A1-01/42411
- WO-A1-96/29977
- WO-A1-97/26095
- WO-A2-01/41912
- WO-A2-2008/079855

## Description

The present invention relates to an improved method for enhanced oil recovery as well as an improved composition for enhanced oil recovery. More particularly, the present invention relates to a new sugar-based surfactant system for enhanced crude oil production from subterranean formations, where the sugar-based surfactant system includes at least one secondary sugar-amide surfactant, a solvent subsystem and a co-solvent subsystem and to methods for making and using the same.

WO-92/06073 discloses processes for making surfactants from fatty acids or their derivatives in combination with N-alkylglucamines, the latter made by reductive amination of glucose. Glucose reductive amination processes are more fully disclosed in US-2016962.

US-1985424 discloses the manufacturing of surfactants by reacting the product of heating glucose and aqueous methylamine in presence of hydrogen and a hydrogenating catalyst under pressure with an organic carboxylic acid such as stearic acid or oleic acid. The condensation product, prepared at about 160 °C, is said to be predominantly an amide.

Environ. Sci. Technol. 1996, 30, 2143 - 2147 and Langmuir 1996, 12, 588 - 590 discloses glucamide surfactants forming microemulsion systems between water and chlorocarbons.

US-2005725470 discloses the use of glucamides in processes for soil remediation.

EP-80855 discloses alkoxylated monosacchharides and their use for enhanced oil recovery. Since alkoxylated compounds will separate out of aqueous solutions at high temperatures and salinities, the composition is not applicable at elevated reservoir conditions (high temperatures and salinities).

WO-2008/079855 teaches a composition and method of treating a hydrocarbon containing formation, comprising:
(a) providing a composition to at least a portion of the hydrocarbon containing formation, wherein the composition comprises a secondary alcohol derivative; and
(b) allowing the composition to interact with hydrocarbons in the hydrocarbon containing formation.
Another embodiment is a composition produced from a hydrocarbon containing formation, comprising hydrocarbons from a hydrocarbon containing formation and a secondary alcohol derivative.

The seondary alcohol derivative may be a linear glucamide surfactant.

The following publications disclose the use of internal olefin sulfonate surfactants in EOR processes:
G.J. Hirasaki; C.A. Miller; M. Puerto, Recent Advances in Surfactant EOR, SPE Journal, 16 (2011), 889-907.
H. ShamsiJazeyi; G.J. Hirasaki; R. Verduzco, Sacrificial Agent for Reducing Adsorption of Anionic Surfactants, SPE-164061-MS, (2014).
H. ShamsiJazeyi; G.J. Hirasaki; R. Verduzco, Reducing adsorption of anionic surfactant for enhanced oil recovery: Part II. Applied aspects, Colloids and Surfaces A: Physicochemical and Engineering Aspects, 453 (2014), 168 - 175.

Since the internal olefin sulfonate surfactants show high adsorption rates to rock surfaces, high dose rates are needed and a reuse of the surfactant composition is not possible. Additionally, internal olefin sulfonate surfactants are not soluble in high salinity brines at high temperatures and are consequently not applicable at elevated reservoir conditions.

WO-2012/146607 discloses glucamines and their use for enhanced oil recovery.

Enhanced Oil Recovery are technologies for increasing the amount of crude oil that can be extracted from an oil field. Methods used in the prior art include gas injection, water or steam injection, chemical injection, microbial injection and thermal methods. They may also be referred to as tertiary oil recovery.

Enhanced Oil Recovery is described in several publications, for instance:
Sheng, J. J. (2011) Modern Chemical Enhanced Oil Recovery - Theory and Practice, Gulf Publishing Company, Houston.

Surfactants for chemical enhanced oil recovery are described in several publications, for instance:
R. Zhang, J. Zhou, L. Peng, N. Qin, Z. Je Tenside Surf. Det. 50 (2013), 3, 214-218.
R. Zhou, J. Zhao, X. Wang, Y. Yang Tenside Surf. Det. 50 (2013), 3, 175 - 181.

The principles of microemulsions is described for instance in:
M. Kahlweit, R. Strey, "Phase Behavior of Ternary Systems of the Type H2O - Oil - Nonionic Amphiphile (Microemulsions)" Angewandte Chemie International Edition (1985) 16: 631-663.

For Enhanced Oil Recovery (EOR), several chemical methods like polymer (P), surfactant polymer (SP), alkaline surfactant polymer (ASP), alkaline surfactant (AS), alkaline polymer (AP), surfactant alkaline foam (SAF), surfactant polymer gels (ASG) and alkaline co-solvent polymer (ACP) treatment have been used in the prior art.

SP, AS and ASP systems comprise use of Alpha-olefin sulfonates, Internal-olefin sulfonates, Alkyl-aryl sulfonates or Alkyl-ether sulfonates. Those sulfonates may be used up to a maximum oil reservoir temperature of about 70 °C. Only in rare cases can the temperature be higher. The water salinity should be below about 35,000 ppm. This is clearly a disadvantage since many oil wells have higher temperatures and higher salinity. Problems regarding chemical injection include that the salinity of many oil fields make the extraction less efficient. The temperature in many oil fields is too high with respect to the chemicals used so that the process becomes inefficient.

A particular problem encountered with the EOR surfactants of the prior art is their insufficient tolerance against the presence of calcium ions. Surfactants with anionic head groups like sulfonates and/or carboxylates interact with the twofold charged Ca cation and create a linear salt structure network. The Calcium is surrounded by two lipophilic side chains of the surfactant molecule and the surfactant is losing its ability to form micellular structures. Due to the increase in lipophilicity the surfactants are less water soluble and can precipitate out of the solution.

In addition to incompatibility with high temperature and/or high salinity, problems in the prior art include that the additives are expensive and/or not based on renewable raw materials. Further, some of the chemicals used today may be toxic and/or non-biodegradable. Further, there is room for improvement regarding the emulsification, superlattice formation, reservoir adsorption and dispersion capabilities of the substances used for EOR according to the state of the art.

It is an objective of the present invention to obviate at least some of the disadvantages in the prior art and to provide an improved method for enhanced oil recovery as well as an improved composition for use in enhanced oil recovery. An objective of this invention was to find a surfactant for EOR that will be effective at reservoir temperatures above 70 °C. Another objective was to find an EOR surfactant effective in salinities as high as 380,000 ppm. Another objective of the instant invention was to find an EOR surfactant that tolerates high calcium concentrations. This is to ensure a homogeneous dissolution of the surfactant in brines with high levels of hardness. Additionally an objective of the present invention was to overcome some of the disadvantages like thermal degradation and high reservoir adsorption of the surfactant. It is another object of the instant invention to provide a composition that can be used in EOR at elevated temperatures, and that is biodegradable.

In a first aspect, the invention relates to a composition for use in EOR, comprising
a) at least one compound selected from the group consisting of formulae (II) - (IV) 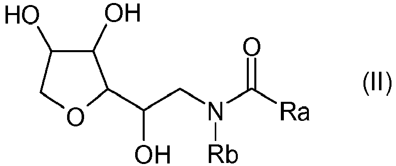 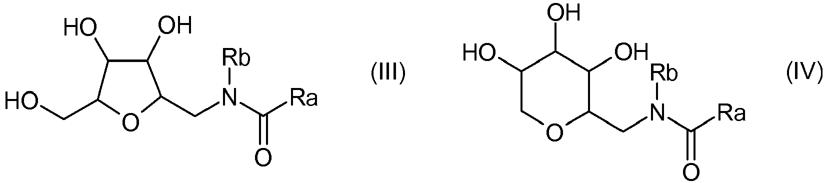 wherein
   - Ra: is a C₅ to C₂₉ aliphatic hydrocarbon group,
   - Rb: is a C₁ to C₂₃ aliphatic hydrocarbon group, and
b) a component selected from the group consisting of water, at least one organic solvent, and a mixture of water and at least one organic solvent

In a second aspect, the invention provides a process for recovering crude oil from a subterranean hydrocarbon containing formation, the process comprising the steps of
a) injecting the composition of the first aspect into said formation,
b) recovering the crude oil.

In a third aspect there is provided use of a composition of the first aspect in oil recovery.

The preferred embodiments as described below will be applicable to all aspects of this invention.

One of the advantages of the described embodiment is that there is provided a new, renewable raw material based surfactant. By adding it to the injected water used during tertiary oil recovery, more oil can be recovered from a well.

The inventive composition has superior emulsification capabilities for oil in water (O/W Winsor type I emulsion), water in oil (W/O Winsor type II emulsion) and Winsor type III emulsions. Further, the composition has superior wetting and dispersion capabilities. Furthermore the properties with regard to the formation of foam are favorable. Also the surfactant overcomes the disadvantage of other low molecular weight surfactants to form superlattices like liquid crystals or gels due to its disability to form intermolecular NH hydrogen bonds.

The inventive composition works well under heat, pressure, high salinity and high water hardness. A reservoir temperature of 60 - 240 °C is possible. Salinities of up to 380,000 ppm are possible. Regular salinities will be up to 300,000 ppm, more likely up to 230,000 ppm and most likely in the range of 180,000 - 150,000 ppm. The inventive composition will tolerate Ca levels of 30,000 ppm and above.

The starting materials for making the inventive composition are inexpensive and renewable. The surfactants according to formula I are non-toxic, biodegradable and reusable.

In most cases it is not necessary to use organic solvents with the compounds of formulae (II) - (IV). Water is preferably used as solvent which is advantageous from an economic and from an environmental point of view. Another unique advantage is that the disclosed surfactant does not readily absorb or interact to or with mineral surfaces due to its secondary amide character. Its disability to form intermolecular NH hydrogen bonds reduces the loss of surfactant concentration for instance in a recycled system.

The use of organic solvents may be necessary in case that the compositions of formulae (II) - (IV) are insufficiently soluble in water. Solubility of said compositions in water decreases with increasing carbon atom number of Ra. Preferably, the use of solvents is required for Ra carbon atom numbers of 15 and higher.

Preferred organic solvents are alcohols. More preferred are monohydric or dihydric alcohols having 1 to 6 carbon atoms, particularly 1 to 4 carbon atoms. Particularly preferred alcohols are Methanol, Ethanol, Propanol, Butanol, Isopropanol, Ethylenglycol, Propylenglycol.

In another preferred embodiment, alkoxylated alcohols can be used as solvent. The alkoxylated alcohols are preferably derived from monohydric or dihydric alcohols having 1 to 6 carbon atoms, particularly 1 to 4 carbon atoms as starting material. In another preferred embodiment the alkoxylated alcohols are derived from aromatic alcohols having 6 to 10 carbon atoms as starting material. The alkoxylated alcohols will preferably have 1 to 10, more preferably 1 to 4 alkoxy groups. Preferably, alkoxy means ethoxy or propoxy, more preferably ethoxy. Examples of ethoxylated alcohols are ethoxylated Butanol, ethoxylated Phenol, ethoxylated benzylalcohol.

A sufficient solubility of the compositions of formulae (II) - (IV) is considered to be a concentration of at least 10 wt.-ppm in water. Preferably, the solvent is selected so that the solubility of the compositions of formulae (II) - (IV) is in the range 10 to 100.000 wt.-ppm.

It must be noted that, as used in this specification and the appended claims, the singular forms "a", "an" and "the" include the plural unless the context clearly dictates otherwise.

If nothing else is defined, any terms and scientific terminology used herein are intended to have the meanings commonly understood by those of skill in the art to which this invention pertains.

The term "about" as used in connection with a numerical value throughout the description and the claims denotes an interval of accuracy, familiar and acceptable to a person skilled in the art. Said interval is +/- 10%.

"Crude Oil" is used herein to denote a naturally occurring mixture consisting of a complex mixture of hydrocarbons of various molecular weights and other organic compounds that are typically found in geologic formations beneath the Earth's surface.

"Hydrocarbon" is used herein to denote an organic compound comprising hydrogen and carbon.

The expressions "surfactant" or "surfactant subsystem" if not defined otherwise refer to component a) of the inventive composition.

In one embodiment of the second aspect, the recovery of crude oil in step b) is from one or especially multiple production wells.

In formulae (II) - (IV), Ra preferably means a C₇ to C₂₃, more preferably a C₉ to C₂₁ aliphatic residue. In another preferred embodiment Ra is either an alkyl or an alkenyl group, preferably an alkyl group. In another preferred embodiment Ra is an alkyl or alkenyl group that is branched.

In one embodiment Ra is linear. In an alternative embodiment Ra is branched. The molecular structure is in a preferred embodiment branched to receive micellar curvature and avoid dense intermicellar packing which results in gel or liquid crystal superlattices formations that causes trouble in reservoir applications.

In one embodiment of this aspect, Ra is saturated. In a preferred embodiment Ra is unsaturated to avoid dense intermicellar packing which results in gel or liquid crystal superlattices formations that causes trouble in reservoir applications.

Rb preferably is an alkyl or alkenyl group having 1 to 6, more preferably 1 to 4 carbon atoms. In another preferred embodiment Rb is an alkyl or alkenyl group. Mostly preferred, Rb is methyl.

In another preferred embodiment, the surfactant subsystem a) of the inventive composition comprises at least 50 wt.-% of one or more of the compounds according to formulae (II) - (IV). This means that at least 50 wt.-% of all surfactants present in the inventive composition correspond to one or more of the compounds according to formulae (II) - (IV). More preferably, this amount is at least 60 wt.-%, particularly more than 75 wt.-%.

According to the instant invention, the surfactant comprises a secondary amide of formulae (II) - (IV). Said secondary amides, in contrast with primary amides, are not able to form intermolecular hydrogen bonds. Intermolecular hydrogen bonds are likely to cause potentially negative intermolecular interactions that result in liquid crystal formation, gel formation or poor solubilization properties as well as strong interaction or adsorption with or on rock and reservoir surfaces.

In one embodiment of the second and third aspects, the surfactant is recycled to said formation after recovering of the crude oil. In one embodiment the same surfactant solution is used to recover oil from different wells. Experiments show that even after 10 recycling steps using the same surfactant solution the recovery rate is sufficient.

In one embodiment of all aspects, the compounds of formulae (II) - (IV) are thermally stable up to 240 °C without any degradation. With other words, said compounds are applicable for the instantly described use or process at reservoir temperatures up to 240 °C.

In one preferred embodiment, the pH of the inventive composition is above 8, more preferably in the range from 8 to 11.5, and still more preferably above 9 up to 11.5. High pH activates the surfactant containing crude oil which increases the amount of recovered oil during the flooding process due to synergistic surfactant effects.

The sugar moiety is cyclic as shown in formula (II) to (IV) to avoid dense intermicellar packing which results in gel or liquid crystal superlattices formations that causes trouble in reservoir applications.

This strongly reduced surface tension results in a very good emulsifying ability of crude oil or oil in general and water. It is known in prior art that surfactants used in EOR preferably should be able to form Winsor III systems with the oil, and certain concentrations of the surfactant, salt and oil do indeed produce such systems. Furthermore, its pronounced wetting and dispersion properties help.

IUPAC defines the term "microemulsion" as follows:
Dispersion made of water, oil, and surfactant(s) that is an isotropic and
thermodynamically stable system with dispersed domain diameter varying approximately from 1 to 100 nm, usually 10 to 50 nm. In a microemulsion the domains of the *dispersed phase* are either globular or interconnected (to give a bicontinuous microemulsion). The average diameter of droplets in macroemulsion (usually referred to as an "*emulsion*") is close to one millimeter (i.e., 10⁻³ m).
Therefore, since micro- means 10⁻⁶ and emulsion implies that droplets of the dispersed phase have diameters close to 10⁻³ m, the microemulsion denotes a system with the size range of the dispersed phase in the 10⁻⁶ × 10⁻³ m = 10⁻⁹ m range. The term "microemulsion" has come to take on special meaning. Entities of the dispersed phase are usually stabilized by surfactant and/or surfactant cosurfactant (e.g., aliphatic alcohol) systems. The term "oil" refers to any water-insoluble liquid.

The molecular structure of the surfactant is preferably a branched secondary amide to avoid an intermolecular dense micellar packing that results in disruptive formation of gel phases, liquid crystals and other intermolecular superlattices. This is facilitated by both the sugar moiety and the secondary amide without an NH-Hydrogen bond, unique to this invention.

The surfactant according to the invention is low toxic and readily biodegradable. This is facilitated by both the sugar moiety and the amide structure (see Examples).

Surprisingly, it has been found that new thermodynamically stable microemulsions are formed including the composition of the first aspect where the systems are substantially optically isotropic and which are capable of increasing gas and/or gas and oil production and water recovery. A thermodynamically stable microemulsion is an emulsion that will not break into an oil phase and a water phase without adding additional surface active compounds.

In a preferred embodiment, the inventive composition is essentially free of ionic surfactants. "Essentially" means that any ionic surfactant other than the compounds according to formulae (II) to (IV) is present in amount of at most 50 wt.-% relative to the total weight of the compounds according to formulae (II) to (IV), preferably less than 25 wt.-%, more preferably less than 10 wt.-%.

Due to the absence of ionic components and the disability to form hydrogen bonds the surfactant - practically being a non-ionic surfactant - does not interact strongly with mineral surfaces or rocks, salt, brine or hard water, and so completely avoids many of problems traditional, ionic surfactants have, like surfactant losses during the flooding process. It does not lose any performance activity during the flooding application and allows the reuse of the produced water which still has a remarkable surfactant activity (see Table 3).

Cyclic Glucamides can be prepared according to the following procedure: 0.5 mol of a 60 wt.-% aqueous N-Methyl-Glucamine solution is heated up to 130 °C while stirring. Water distills off and finally 30 mbar vacuum is applied for 1 hour to get a dry melt of N-Methyl-Glucamine. Then the temperature is raised to 160 °C and the vacuum is broken with Nitrogen. Afterwards 0.5 mol of a pre-heated (120 °C) fatty acid is added slowly by means of a dropping funnel to avoid foaming and formation of gel phases of the reaction mixture. Reaction water distills off and the temperature is kept at 160 °C as long as the acid number (titration) indicates a content of residual fatty acid >1%. The resulting cyclic Glucamide is a 90-95% pure melt.

### Examples

The samples were the substances shown below:

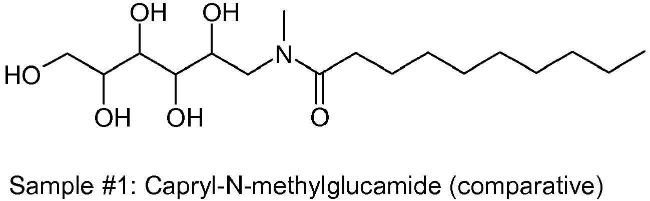

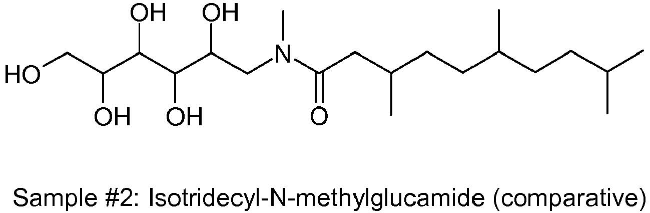

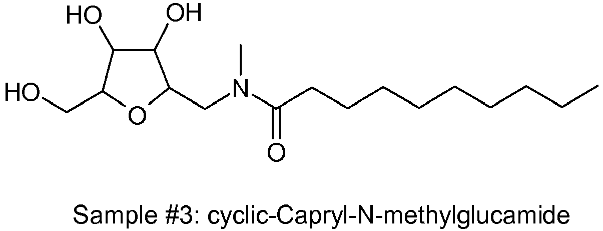

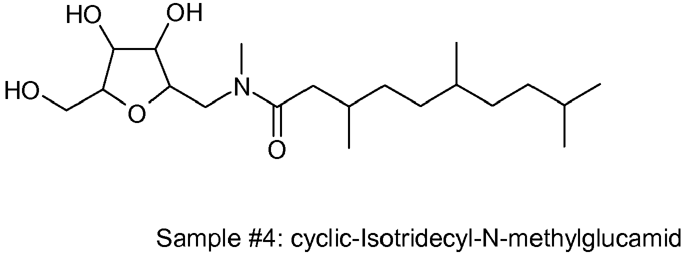

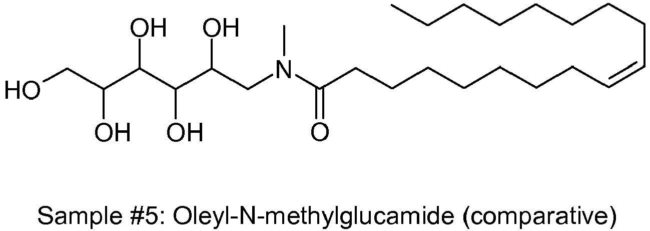

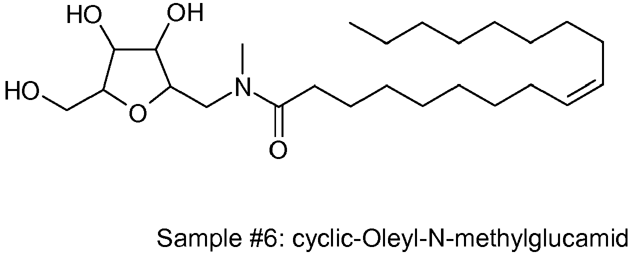

All surface tension measurements were done on a Krüss K100C-Mk2 Tensiometer using the Wilhelmy plate method at 20° ± 2°C. 0.1 gram of each surfactant product was measured and then brought up to 100 gram using DI water. The solution was allowed to stir for 10 minutes in order to ensure homogeneity. Solutions were filtered off using a 0.45 micron filter before measurement.

**Table 1: Surface tension of aqueous solutions of surfactants according to samples #1 to #6**

| Example # | Sample # | Surfact Tension / mN/m |
|---|---|---|
| 1 (C) | 1 | 25.2 |
| 2 (C) | 2 | 26.1 |
| 3 | 3 | 26.3 |
| 4 | 4 | 26.2 |
| 4a (C) | 5 | 26.0 |
| 4b | 6 | 25.9 |

**Table 2: Effect of surfactant adsorption to mineral surfaces in mg/g.**

| Example # | Surfactant Sample # 1 / Adsorbent | Surface Area (cm²/g) | Adsorption (mg/g) | Adsorption (ng/cm²) |
|---|---|---|---|---|
| 9 (C) | Quartz sand (specific surface area 0.35 m²/g) | 3500 | 0.15 | 42 |
| 10 (C) | Reservoir sand (kibbled, specific surface area 0.51 m²/g) | 5100 | 0.15 | 29 |
| | | | | |

| Example # | Surfactant Sample # 2 / Adsorbent | Surface Area (cm²/g) | Adsorption (mg/g) | Adsorption (ng/cm²) |
|---|---|---|---|---|
| 11 (C) | Quartz sand (specific surface area 0.35 m²/g) | 3500 | 0.1 | 28 |
| 12 (C) | Reservoir sand (kibbled, specific surface area 0.51 m²/g) | 5100 | 0.1 | 19 |

| Example # | Surfactant Sample # 3 / Adsorbent | Surface Area (cm²/g) | Adsorption (mg/g) | Adsorption (ng/cm²) |
|---|---|---|---|---|
| 13 | Quartz sand (specific surface area 0.35 m²/g) | 3500 | 0.05 | 14 |
| 14 | Reservoir sand (kibbled, specific surface area 0.51 m²/g) | 5100 | 0.1 | 19 |
| | | | | |

| Example # | Surfactant Sample # 4 / Adsorbent | Surface Area (cm²/g) | Adsorption (mg/g) | Adsorption (ng/cm²) |
|---|---|---|---|---|
| 15 | Quartz sand (specific surface area 0.35 m²/g) | 3500 | 0.05 | 14 |
| 16 | Reservoir sand (kibbled, specific surface area 0.51 m²/g) | 5100 | 0.05 | 9 |

The adsorption has been measured using a common chromatography column filled with Quartz sand or reservoir sand. The surfactant concentration of the liquid phase was measured before and after the column by standard HPLC methods to determine the differences in surfactant concentration of the liquid phase before and after the eluent passed the stationary phase. The difference of both surfactant concentrations represents the adsorption in mg/g.

### Enhanced oil recovery testing experimental procedure:

A laboratory setup was made to simulate enhanced oil recovery. In the experiments the crude oil and salt solution were filled into a sand-pack column. A crude oil (500 g) of API 14.5 was heated to 90 °C (reservoir temperature). A brine solution (50,000 ppm NaCI) was prepared using 50 g NaCl and 1000 mL of water and heated up to 90 °C. The sand pack was pre-flushed with the hot brine solution followed by crude oil to yield a column full of crude oil. Afterwards, a pre-prepared surfactant solution (with 10 g surfactant, sample 1,2,3 or 4 in 1000 mL of the above mentioned hot brine solution) was flushed though the sand pack to recover the oil.

The recovered surfactant solution (aqueous phase) can be separated from the oil layer with a commonly used emulsion breaker and can be re-used for the next flooding process by at least 10 times with an remarkable effect.

Surfactant concentration in samples was 0.1 - 3.0 wt.-% unless otherwise specified.

All samples were repeated twice; results are almost always identical. If differing, another sample is run to determine the outlier sample, which result is thus discarded.

**Table 3: Oil recovery**

| Example # | Surfactant | Surfactant Conc. (wt.-%) | Brine (ppm NaCl) | Oil recovered from sand pack (%) |
|---|---|---|---|---|
| 17 (C) | Sample #1 | 1 | 50,000 | 92 |
| 18 (C) | Sample #2 | 1 | 50,000 | 98 |
| 19 | Sample #3 | 1 | 50,000 | 91 |
| 20 | Sample #4 | 1 | 50,000 | 94 |
| | | | | |
| 21 (C) | Sample #1 | 3 | 35,000 | 95 |
| 22 (C) | Sample #2 | 3 | 35,000 | 98 |
| 23 | Sample #3 | 3 | 35,000 | 93 |
| 24 | Sample #4 | 3 | 35,000 | 98 |
| | | | | |
| 25 (C) | Sample #1 | 0.5 | 45,000 | 90 |
| 26 (C) | Sample #2 | 0.5 | 45,000 | 97 |
| 27 | Sample #3 | 0.5 | 45,000 | 88 |
| 28 | Sample #4 | 0.5 | 45,000 | 92 |
| | | | | |
| 29 (C) | Sample #1 | 0.1 | 90,000 | 47 |
| 30 (C) | Sample #2 | 0.1 | 90,000 | 58 |
| 31 | Sample #3 | 0.1 | 90,000 | 49 |
| 32 | Sample #4 | 0.1 | 90,000 | 55 |
| | | | | |
| 33 (C) | Sample #1 | 1 | 230,000 | 93 |
| 34 (C) | Sample #2 | 1 | 230,000 | 98 |
| 35 | Sample #3 | 1 | 230,000 | 92 |
| 36 | Sample #4 | 1 | 230,000 | 95 |
| | | | | |
| 37 (C) | Sample #1 | 1 | 60,000 | 92 |
| 38 (C) | Sample #2 | 1 | 60,000 | 98 |
| 39 | Sample #3 | 1 | 60,000 | 91 |
| 40 | Sample #4 | 1 | 60,000 | 96 |
| | | | | |
| 41 (C) | Sample #5 | 1 | 75,000 | 98 |
| 42 | Sample #6 | 1 | 75,000 | 96 |
| 43 (C) | C 20-24 internal olefin sulfonate | 1 | 35,000 | 15 (partially insoluble) |
| 44 (C) | C 20-24 internal olefin sulfonate | 1 | 75,000 | 5 (insoluble) |

Between 0.1 - 30 wt.-% salt contents, the oil recovery rate for the surfactants according to the invention is practically unchanged and lies at around 90 %, in sharp contrast to the other commercially available surfactant comparisons. Multiple repeat samples gave the same results.

The secondary amide surfactants have shown that the disability to form intermolecular hydrogen bonds has a strong effect on surfactant adsorption to mineral surfaces. Almost no adsorption was found.

The glucamide surfactants have shown their high temperature stability up to 240 °C and gave efficient oil recovery rates at elevated temperatures (90 °C). Additionally the sugar amide surfactants showed high marine biodegradation and low aquatic toxicity.

While heated and mixed, oil forms macroemulsions with the surfactant solution, and almost fully separates when using a commercially available nonionic emulsion breaker.

The surfactant solution is easily foaming, but this is readily reduced when it comes into contact with crude oil.

### Example 45

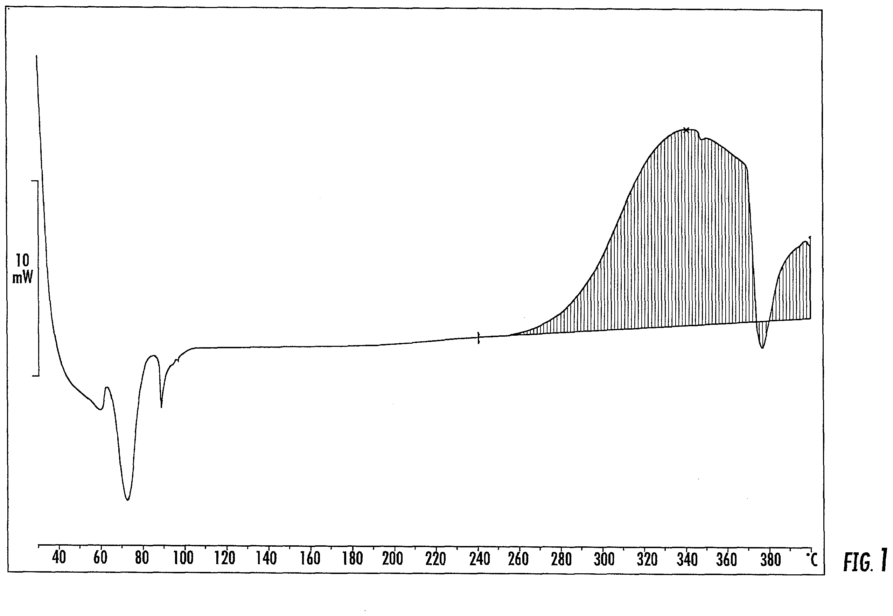

Thermal stability of the surfactants according to sample #3 has been determined by DSC as shown in Fig. 1. A sample size of 35.23 mg was used. The integral according to the shaded area in the DSC plot was 14,230 mJ which corresponds to a normalized integral of 404.93 J/g. Onset was 239.38 °C, peak was at 341.13°C, endset at 380.03 °C. Integration limits were 239.38 and 399.57.

### Example 46 ff

The hard brine tolerance of the cyclic Glucamide sample#3 (cyclic C₈/C₁₀ alkyl N-Methylglucamide was tested in comparison to ENORDET 332 an internal olefin sulfonate from Shell, and the linear pendant to the cyclic Glucamide, linear C₈/C₁₀ alkyl N-Methlyglucamide by dissolution testing with DI water by the addition of CaCl₂ as Ca cation.

**Table 4: Hard brine tolerance**

| Chemistry | Solubility [ppm Ca 2⁺] | | | | | |
|---|---|---|---|---|---|---|
| | 1000 | 2000 | 3000 | 5000 | 10000 | 30000 |
| ENORDET 332 (Internal Olefin Sulfonate from Shell) | clear | Slightly hazy | hazy | hazy | hazy | hazy |
| Linear C₈/C₁₀ alkyl N-Methylglucamide | Slightly hazy | Slightly hazy | Slightly hazy | hazy | hazy | hazy |
| Cyclic C₈/C₁₀ alkyl N-Methylglucamide | clear | clear | clear | clear | clear | clear |

## Claims

1. A process for recovering crude oil from a subterranean hydrocarbon containing formation, the process comprising the steps of
A) injecting a composition comprising
a) at least one compound selected from the group consisting of formulae (II) - (IV) 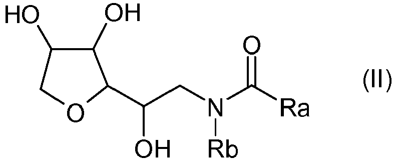 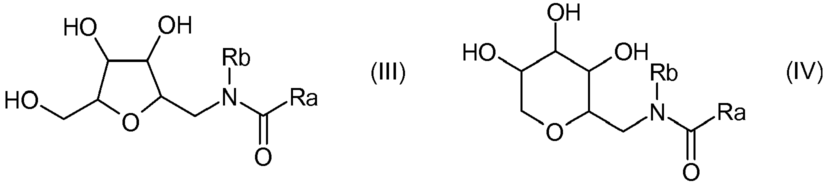 wherein
Ra is a C₅ to C₂₉ aliphatic hydrocarbon group,
Rb is a C₁ to C₂₃ aliphatic hydrocarbon group, and
b) a component selected from the group consisting of water, at least one organic solvent, and a mixture of water and at least one organic solvent
into said formation, and
B) recovering the crude oil.

2. Process according to claim 1, wherein Ra is C₇ to C₂₃.

3. The process according to claim 1 and/or 2, wherein the pH of the composition is above 8.

4. The process according to one or more of claims 1 - 3, wherein Ra is C₉ to C₂₁.

5. The process according to one or more of claims 1 - 4, wherein Ra is linear.

6. The process according to one or more of claims 1 - 4, wherein Ra is branched.

7. The process according to one or more of claims 1 - 6, wherein Ra is saturated.

8. The process according to one or more of claims 1 - 6, wherein Ra is unsaturated.

9. The process according to one or more of claims 1 - 8, wherein Rb is linear.

10. The process according to one or more of claims 1 - 8, wherein Rb is branched.

11. The process according to one or more of claims 1 - 10, wherein Rb is saturated.

12. The process according to one or more of claims 1 - 10, wherein Rb is unsaturated.

13. The process according to one or more of claims 1 - 8, wherein Rb is methyl.

14. The process according to one or more of claims 1 - 13, wherein the organic solvent is an alcohol.

15. The process according to claim 14, wherein the alcohol is selected from a monohydric or dihydric alcohol having 1 to 6 carbon atoms, a monohydric or dihydric alcohol having 1 to 6 carbon atoms and being alkoxylated with 1 to 10 alkoxy groups, and an aromatic alcohol having 6 to 10 carbon atoms being alkoxylated with 1 to 10 alkoxy groups.

16. Use of a composition comprising
a) at least one compound selected from the group consisting of formulae (II) - (IV) 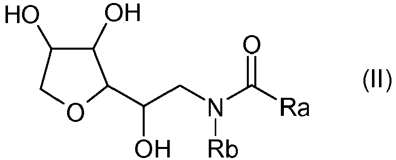 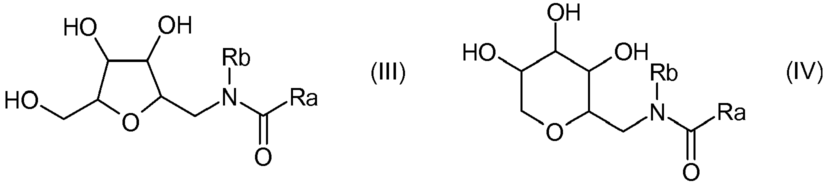 wherein
Ra is a C₅ to C₂₉ aliphatic hydrocarbon group,
Rb is a C₁ to C₂₃ aliphatic hydrocarbon group, and
b) a component selected from the group consisting of water, at least one organic solvent, and a mixture of water and at least one organic solvent, as surfactant in oil recovery methods.

17. Use according to claim 16, wherein crude oil is recovered from a subterranean hydrocarbon-containing formation.

18. Use according to claim 16 or 17, in recovery of crude oil that is from one or more production wells.

19. Use according to one or more of claims 16 - 18, wherein the composition is recycled to said formation after recovering of the oil.

20. The process according to one or more of claims 1 - 15, wherein the composition is recycled to the formation after recovering of the oil.

21. The process according to one or more of claims 1 - 15 and/or 20, wherein the crude oil is recovered from one or more production wells.

22. A thermodynamically stable microemulsion, comprising a surfactant according to formulae (II) - (IV) as defined in one or more of claims 1 - 13, crude oil and water.

23. The thermodynamically stable microemulsion according to claim 22, further comprising an organic solvent, preferably an alcohol.

24. The thermodynamically stable microemulsion according to claim 23, wherein the alcohol is a monohydric or dihydric alcohol having 1 to 6 carbon atoms, a monohydric or dihydric alcohol having 1 to 6 carbon atoms and being alkoxylated with 1 to 10 alkoxy groups, and an aromatic alcohol having 6 to 10 carbon atoms being alkoxylated with 1 to 10 alkoxy groups

## Patentansprüche

1. Verfahren zur Gewinnung von Rohöl aus einer unterirdischen kohlenwasserstoffhaltigen Formation, wobei das Verfahren folgende Schritte umfasst:
A) Einpressen einer Zusammensetzung, umfassend
a) mindestens eine Verbindung aus der Gruppe bestehend aus den Formeln (II)-(IV) 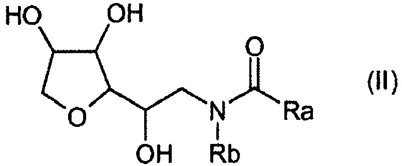 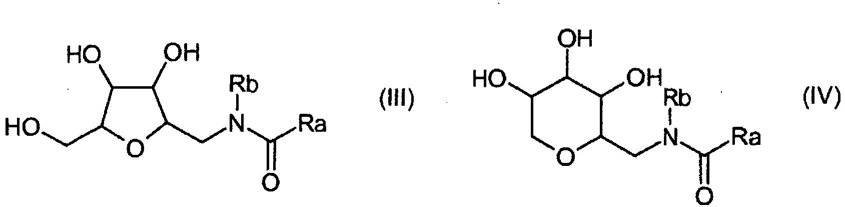 wobei
Ra für eine aliphatische C₅- bis C₂₉-Kohlenwasserstoffgruppe steht,
Rb für eine aliphatische C₁- bis C₂₃-Kohlenwasserstoffgruppe steht, und
b) eine Komponente aus der Gruppe bestehend aus Wasser, mindestens einem organischen Lösungsmittel und einer Mischung von Wasser und mindestens einem organischen Lösungsmittel,
in die Formation und
B) Gewinnen des Rohöls.

2. Verfahren nach Anspruch 1, wobei Ra C₇ bis C₂₃ ist.

3. Verfahren nach Anspruch 1 und/oder 2, wobei der pH-Wert der Zusammensetzung über 8 liegt.

4. Verfahren nach einem oder mehreren der Ansprüche 1-3, wobei Ra C₉ bis C₂₁ ist.

5. Verfahren nach einem oder mehreren der Ansprüche 1-4, wobei Ra linear ist.

6. Verfahren nach einem oder mehreren der Ansprüche 1-4, wobei Ra verzweigt ist.

7. Verfahren nach einem oder mehreren der Ansprüche 1-6, wobei Ra gesättigt ist.

8. Verfahren nach einem oder mehreren der Ansprüche 1-6, wobei Ra ungesättigt ist.

9. Verfahren nach einem oder mehreren der Ansprüche 1-8, wobei Rb linear ist.

10. Verfahren nach einem oder mehreren der Ansprüche 1-8, wobei Rb verzweigt ist.

11. Verfahren nach einem oder mehreren der Ansprüche 1-10, wobei Rb gesättigt ist.

12. Verfahren nach einem oder mehreren der Ansprüche 1-10, wobei Rb ungesättigt ist.

13. Verfahren nach einem oder mehreren der Ansprüche 1-8, wobei Rb für Methyl steht.

14. Verfahren nach einem oder mehreren der Ansprüche 1-13, wobei es sich bei dem organischen Lösungsmittel um einen Alkohol handelt.

15. Verfahren nach Anspruch 14, wobei der Alkohol aus einem einwertigen oder zweiwertigen Alkohol, der 1 bis 6 Kohlenstoffatome aufweist, einem einwertigen oder zweiwertigen Alkohol, der 1 bis 6 Kohlenstoffatome aufweist und mit 1 bis 10 Alkoxygruppen alkoxyliert ist, und einem aromatischen Alkohol, der 6 bis 10 Kohlenstoffatome aufweist und mit 1 bis 10 Alkoxygruppen alkoxyliert ist, ausgewählt ist.

16. Verwendung einer Zusammensetzung, umfassend
a) mindestens eine Verbindung aus der Gruppe bestehend aus den Formeln (II)-(IV) 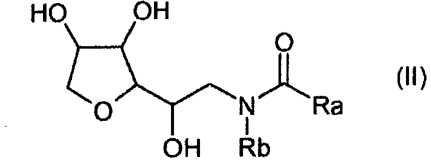 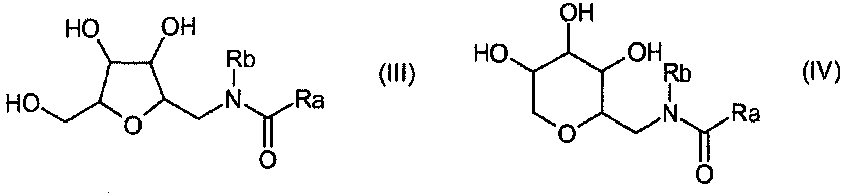 wobei
Ra für eine aliphatische C₅- bis C₂₉-Kohlenwasserstoffgruppe steht,
Rb für eine aliphatische C₁- bis C₂₃-Kohlenwasserstoffgruppe steht, und
b) eine Komponente aus der Gruppe bestehend aus Wasser, mindestens einem organischen Lösungsmittel und einer Mischung von Wasser und mindestens einem organischen Lösungsmittel,
als Tensid bei Ölgewinnungsmethoden.

17. Verwendung nach Anspruch 16, wobei das Rohöl aus einer unterirdischen kohlenwasserstoffhaltigen Formation gewonnen wird.

18. Verwendung nach Anspruch 16 oder 17 bei der Gewinnung von Rohöl aus einer oder mehreren Produktionsbohrungen.

19. Verwendung nach einem oder mehreren der Ansprüche 16-18, wobei die Zusammensetzung nach der Gewinnung des Öls in die Formation zurückgeführt wird.

20. Verfahren nach einem oder mehreren der Ansprüche 1-15, wobei die Zusammensetzung nach der Gewinnung des Öls in die Formation zurückgeführt wird.

21. Verfahren nach einem oder mehreren der Ansprüche 1-15 und/oder 20, wobei das Rohöl aus einer oder mehreren Produktionsbohrungen gewonnen wird.

22. Thermodynamisch stabile Mikroemulsion, umfassend ein Tensid gemäß den Formeln (II)-(IV) gemäß der in einem oder mehreren der Ansprüche 1-13 angegebenen Definition, Rohöl und Wasser.

23. Thermodynamisch stabile Mikroemulsion nach Anspruch 22, ferner umfassend ein organisches Lösungsmittel, vorzugsweise einen Alkohol.

24. Thermodynamisch stabile Mikroemulsion nach Anspruch 23, wobei es sich bei dem Alkohol um einen einwertigen oder zweiwertigen Alkohol, der 1 bis 6 Kohlenstoffatome aufweist, einen einwertigen oder zweiwertigen Alkohol, der 1 bis 6 Kohlenstoffatome aufweist und mit 1 bis 10 Alkoxygruppen alkoxyliert ist, und einen aromatischen Alkohol, der 6 bis 10 Kohlenstoffatome aufweist und mit 1 bis 10 Alkoxygruppen alkoxyliert ist, handelt.

## Revendications

1. Procédé de récupération de pétrole brut à partir d'une formation souterraine contenant des hydrocarbures, le procédé comprenant les étapes de
A) injection d'une composition comprenant
a) au moins un composé choisi dans le groupe constitué des formules (II) à (IV) 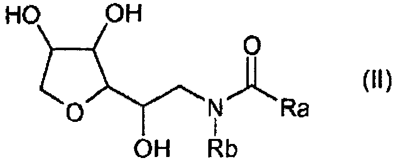 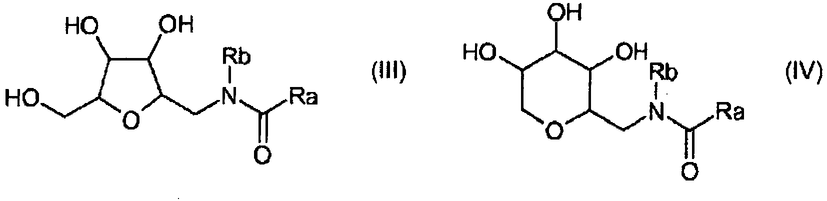 dans lequel
Ra est un groupe hydrocarboné aliphatique en C₅ à C₂₉,
Rb est un groupe hydrocarboné aliphatique en C₁ à C₂₃, et
b) un composant choisi dans le groupe constitué de l'eau, au moins un solvant organique, et un mélange d'eau et d'au moins un solvant organique
dans ladite formation, et
B) récupération du pétrole brut.

2. Procédé selon la revendication 1, dans lequel Ra est en C₇ à C₂₃.

3. Procédé selon la revendication 1 et/ou 2, dans lequel le pH de la composition est supérieur à 8.

4. Procédé selon une ou plusieurs des revendications 1 à 3, dans lequel Ra est en C₉ à C₂₁.

5. Procédé selon une ou plusieurs des revendications 1 à 4, dans lequel Ra est linéaire.

6. Procédé selon une ou plusieurs des revendications 1 à 4, dans lequel Ra est ramifié.

7. Procédé selon une ou plusieurs des revendications 1 à 6, dans lequel Ra est saturé.

8. Procédé selon une ou plusieurs des revendications 1 à 6, dans lequel Ra est insaturé.

9. Procédé selon une ou plusieurs des revendications 1 à 8, dans lequel Rb est linéaire.

10. Procédé selon une ou plusieurs des revendications 1 à 8, dans lequel Rb est ramifié.

11. Procédé selon une ou plusieurs des revendications 1 à 10, dans lequel Rb est saturé.

12. Procédé selon une ou plusieurs des revendications 1 à 10, dans lequel Rb est insaturé.

13. Procédé selon une ou plusieurs des revendications 1 à 8, dans lequel Rb est méthyle.

14. Procédé selon une ou plusieurs des revendications 1 à 13, dans lequel le solvant organique est un alcool.

15. Procédé selon la revendication 14, dans lequel l'alcool est choisi parmi un alcool monohydrique ou dihydrique ayant 1 à 6 atomes de carbone, un alcool monohydrique ou dihydrique ayant 1 à 6 atomes de carbone et étant alcoxylé avec 1 à 10 groupes alcoxy, et un alcool aromatique ayant 6 à 10 atomes de carbone étant alcoxylé avec 1 à 10 groupes alcoxy.

16. Utilisation d'une composition comprenant
a) au moins un composé choisi dans le groupe constitué des formules (II) à (IV) 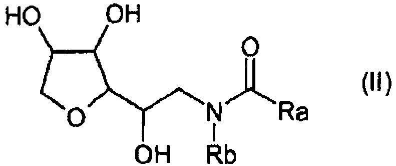 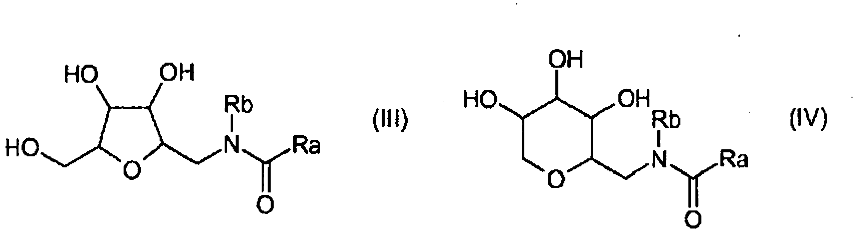 dans lesquelles
Ra est un groupe hydrocarboné aliphatique en C₅ à C₂₉,
Rb est un groupe hydrocarboné aliphatique en C₁ à C₂₃, et
b) un composant choisi dans le groupe constitué de l'eau, au moins un solvant organique, et un mélange d'eau et d'au moins un solvant organique,
en tant que tensioactif dans des procédés de récupération de pétrole.

17. Utilisation selon la revendication 16, dans laquelle du pétrole brut est récupéré à partir d'une formation souterraine contenant des hydrocarbures.

18. Utilisation selon la revendication 16 ou 17, dans la récupération de pétrole brut qui provient d'un ou plusieurs puits de production.

19. Utilisation selon une ou plusieurs des revendications 16 à 18, dans laquelle la composition est recyclée vers ladite formation après récupération du pétrole.

20. Procédé selon une ou plusieurs des revendications 1 à 15, dans lequel la composition est recyclée vers la formation après récupération du pétrole.

21. Procédé selon une ou plusieurs des revendications 1 à 15 et/ou 20, dans lequel le pétrole brut est récupéré à partir d'un ou plusieurs puits de production.

22. Microémulsion thermodynamiquement stable, comprenant un tensioactif selon les formules (II) à (IV) tel que défini dans une ou plusieurs des revendications 1 à 13, du pétrole brut et de l'eau.

23. Microémulsion thermodynamiquement stable selon la revendication 22, comprenant en outre un solvant organique, de préférence un alcool.

24. Microémulsion thermodynamiquement stable selon la revendication 23, dans laquelle l'alcool est un alcool monohydrique ou dihydrique ayant 1 à 6 atomes de carbone, un alcool monohydrique ou dihydrique ayant 1 à 6 atomes de carbone et étant alcoxylé avec 1 à 10 groupes alcoxy, et un alcool aromatique ayant 6 à 10 atomes de carbone étant alcoxylé avec 1 à 10 groupes alcoxy.
